# FASCICULE DE BREVET EUROPEEN

(11) **EP 0 707 951 B1**
(45) Date de publication et mention de la délivrance du brevet: **12.04.2000**
(21) Numéro de dépôt: 95402204.2
(22) Date de dépôt: 03.10.1995
(51) Int. Cl.: B32B 17/10

(54) **Vitrage de sécurité**
SICHERHEITSGLAS
Safety glass

(30) Priorité: 06.10.1994 FR 9411958
(43) Date de publication de la demande: 24.04.1996
(73) Titulaire: SAINT-GOBAIN VITRAGE, 92400 Courbevoie (FR)
(72) Inventeur: Chaussade, Pierre, F-45600 Sully sur Loire (FR); Heutte, Catherine, F-45600 Sully sur Loire (FR)
(74) Mandataire: Muller, René

(56) Documents cités:
- EP-A- 0 527 682
- FR-A- 2 322 106
- US-A- 4 062 887

## Description

La présente invention est relative à un vitrage de sécurité présentant des propriétés de résistance à la pénétration (ou d'absorption d'énergie) et des propriétés d'antilacération, qui se conservent dans des conditions très variables de température et d'humidité, ce vitrage pouvant être utilisé en tant que vitrage de sécurité pour véhicule de transport.

Des vitrages de sécurité présentant à la fois des propriétés de résistance à la pénétration et des propriétés d'antilacération sont décrits par exemple dans les publications de brevet FR-A-2398606 et FR-A-2549036. Ces vitrages sont formés d'un substrat monolithique ou feuilleté en verre et d'une feuille de matière plastique destinée à être orientée vers l'habitacle du véhicule de transport. La feuille en matière plastique comprend une couche adhésive en polyuréthane pouvant en outre selon l'épaisseur utilisée assurer des propriétés d'absorbeur d'énergie, et une couche dite de surface ayant notamment des propriétés de résistance à la rayure et à l'abrasion.

D'autres vitrages présentant cette structure asymétrique dite à deux couches ou « bilayer », à savoir un substrat en verre et une feuille de matière plastique sont décrits dans les publications de brevets US-A-3900673 et US-A-4469743. Dans cette variante la feuille de matière plastique qui comprend une feuille de renforcement en polyéthylène téréphtalate adhère au substrat en verre par l'intermédiaire d'une couche de polyvinylbutyral plastifié (PVB).

Cette variante est satisfaisante en termes de propriétés d'adhésion et d'absorption d'énergie lorsque le vitrage est placé dans des conditions de températures et d'humidité normales. En particulier la résistance à la pénétration du PVB dans ces conditions est meilleure que celle d'une couche de même épaisseur en polyuréthane. En revanche, à basse température, ces propriétés ne sont plus satisfaisantes, le PVB perdant une grande partie de ses propriétés mécaniques notamment de ses propriétés de résistances à la pénétration. En outre, en présence d'une forte humidité, l'adhésion du PVB avec le substrat en verre n'est généralement plus suffisante.

L'invention propose un vitrage de sécurité asymétrique qui offre à la fois des propriétés de résistance à la pénétration et des propriétés d'antilacération ou anti-éclats, et qui les conserve dans des conditions de températures et d'humidité très variables.

Le vitrage selon l'invention comprend : -un substrat en verre, -une feuille complexe comprenant une couche de PVB et un film de polyester, notamment du polyéthylène téréphtalate, pourvu d'un revêtement résistant à la rayure et à l'abrasion et, intercalée entre la feuille de verre et la couche de PVB, -une couche adhésive supplémentaire de polyuréthane essentiellement thermoplastique ou à caractère thermoplastique.

L'ajout d'une couche adhésive en polyuréthane permet de conserver une bonne adhésion de la feuille complexe par l'intermédiaire de sa couche de PVB avec le substrat en verre, dans des conditions de températures et d'humidité très variables.

Avantageusement la couche adhésive en polyuréthane présente une épaisseur suffisante, c'est-à-dire généralement supérieure à 0,2 mm, pour posséder en outre des propriétés d'absorbeur d'énergie.

La combinaison ainsi réalisée dans un vitrage de type « bilayer » d'une couche adhésive et d'absorbeur d'énergie en polyuréthane et d'une couche d'absorbeur d'énergie en PVB permet de conserver les bonnes propriétés d'antipénétration et/ou d'anti-éclats du vitrage dans une très large plage de températures et surtout à basses températures, c'est-à-dire à des températures inférieures à 0°C et même inférieures à - 20°C.

Afin d'assurer la liaison de la couche de polyuréthane avec le substrat en verre on utilise avantageusement un primaire que l'on dépose sur au moins une des faces de contact du verre et de la couche de polyuréthane, généralement sur la surface du verre. Un primaire convenable peut contenir un agent de couplage de type organosilane, généralement sur la surface du verre.

En variante la couche de polyuréthane peut contenir dans sa masse un tel agent de couplage, ce qui rend facultatif le primage de la surface du verre.

Un organosilane convenable est par exemple choisi parmi le gamma-aminopropyltriéthoxysilane, le gamma-aminopropyltriméthoxysilane, le gamma-mercaptopropyltriméthoxysilane, le gamma-glycidoxypropyltriméthoxysilane, le gamma-chloropropyltriméthoxysilane, le vinyltrichlorosilane.

Le substrat en verre peut être un substrat feuilleté ou un substrat monolithique. La ou les feuilles de verre peuvent être en verre recuit, ou en verre trempé thermique ou trempé chimique.

La couche de polyuréthane se présente avantageusement sous la forme d'un film de polyuréthane thermoplastique aliphatique, ou cycloaliphatique, ou aliphatique-aromatique dont l'épaisseur peut varier de 0,1 à 3 mm et de préférence de 0,2 à 1 mm.

La couche en polyuréthane est généralement formée à partir d'un composant isocyanate choisi parmi les isocyanates aliphatiques, cycloaliphatiques, aliphatiques-aromatiques non sensibles à la lumière, et pouvant contenir des fonctions urées, ou encore des biurets d'isocyanate, et d'un composant polyol comprenant au moins un polyol long choisi parmi des polyétherpolyols ou des polyesterpolyols de masse moléculaire comprise entre 450 et 2000, des polycaprolactones de masse moléculaire comprise entre 500 et 2000, des polycarbonatepolyols et polyesterpolycarbonatepolyols de masse moléculaire comprise entre 1000 et 2000, des polybutadiènes à fonction hydroxyle ou carboxyle, associé le cas échéant à au moins un diol court de masse moléculaire comprise entre 50 et 200.

On peut utiliser en particulier en tant qu'isocyanate les isocyanates difonctionnels aliphatiques comme le 1,6-hexanediisocyanate, le 2,2,4-triméthyl-1,6-hexanediisocyanate, le 2,4,4,-triméthyl-1,6-hexanediisocyanate, le 1,3-bis (isocyanatométhyl) benzène, le bis-(4-isocyanatocyclohexyl)méthane, le bis-(3-méthyl-4-isocyanatocyclohexyl)méthane, le 2,2-bis-(4-iso-cyanatocyclohexyl) propane et le 3-isocyanatométhyl-3,5,5-triméthylcyclohe-xylisocyanate, le p-phénylènediisocyanate et p-cyclohexyldiisocyanate.

On utilise par exemple en tant que polyols des polyols obtenus par réaction d'alcools polyfonctionnels avec des diacides aliphatiques ou des éthers cycliques. Les alcools polyfonctionnels sont par exemple le 1,2-éthanediol (éthylèneglycol), le 1,2-propanediol, le 1,3-propanediol, le 1,2-butanediol, le 1,4-butanediol, le 2,2-diméthyl-1,3-propanediol (néopentylglycol), le 1,6-hexanediol, le 2-méthyl-2,4-pentanediol, le 3-méthyl-2,4-pentanediol, le 2-éthyl-1,3-hexanediol, le 2,2,4-triméthyl-1,3-pentanediol, le diéthylèneglycol, le triéthylèneglycol, les polyéthylèneglycols, le dipropylèneglycol, le tripopylèneglycol, les polypropylèneglycols ou le 2,2-bis (hydroxy-méthyl) 1-1-propanol (triméthyloléthane), le 2,2-bis (hydroxyméthyl)-1-butanol (triméthylolpropane), le 1,2,4-butanetriol, le 1,2,6-hexanetriol, le 2,2-bis (hydroxyméthyl)-1,3-propanediol (pentaérythritol), le 1,2,3,4,5,6-hexanehexol (sorbitol), le cyclohexanediméthanol.

Les diacides aliphatiques sont par exemple l'acide malonique, l'acide succinique, l'acide glutarique, l'acide adipique, l'acide subérique, et l'acide sébacique.

Le composant polyol peut encore comprendre le cas échéant un agent réticulant de fonctionnalité supérieure à 2 tel un triol de masse moléculaire comprise entre 100 et 3000.

La feuille complexe est formée d'une couche de PVB plastifié associée à un film de polyester tel que du polyéthylène téréphtalate (PET) revêtu d'une couche dure de protection anti-rayure et anti-abrasion à base de polysiloxane ou d'une couche autocicatrisable à base d'un polyuréthane de préférence réticulé (thermodurcissable).

Un PVB plastifié convenable est par exemple commercialisé sous l'appellation SAFLEX ® par la Société MONSANTO ou encore commercialisé sous l'appellation BUTACITE ® par la Société DU PONT DE NEMOURS. Son épaisseur est par exemple de 0,38 mm ou de 0,76 mm.

Le film de polyester présente une épaisseur généralement inférieure à 0,5 mm. Le revêtement dur en organopolysiloxane est compris généralement entre 0,5 et 50 µm.

La feuille complexe formée d'une couche de PVB et d'un film de polyester notamment de PET revêtu d'une couche anti-rayure et anti-abrasion peut être fabriquée au moment même de l'opération d'assemblage du vitrage, par empilage des éléments. Avantageusement, l'invention utilise une feuille complexe préfabriquée comprenant une couche de PVB de 0,38 ou 0,76 mm d'épaisseur et un film de polyéthylène téréphtalate d'environ 0,2 mm d'épaisseur enduit d'une couche de polysiloxane. Une telle feuille complexe est commercialisée par exemple sous l'appellation SPALLSHIELD® par la SOCIETE DU PONT DE NEMOURS.

L'invention envisage donc l'association d'une couche de polyuréthane thermoplastique ou à caractère thermoplastique avec une couche de polyvinylbutyral plastifié afin de conférer au vitrage de sécurité asymétrique verre-matière plastique (bilayer) des propriétés de résistance à la pénétration et d'anti-éclats qui se conservent dans une plage de températures plus étendue et dans des conditions d'humidité plus extrêmes que celles permises par le seul usage du PVB.

D'autres avantages et caractéristiques de l'invention apparaîtront dans la description des exemples suivants :

### EXEMPLE 1

On fabrique un vitrage selon l'invention en assemblant une feuille de verre recuit de 3 mm d'épaisseur avec une feuille complexe formée d'une couche de PVB plastifié de 0,38 mm d'épaisseur, d'un film de polyéthylène téréphtalate (PET) de 0,18 mm d'épaisseur revêtu d'une couche de polysiloxane, en interposant entre la feuille de verre préalablement traitée à l'aide d'une composition d'un produit à base d'organosilane à savoir du gamma-aminopropyltriéthoxosilane commercialisé sous l'appellation A1100 par la Société UNION CARBIDE, et la feuille complexe, un film en polyuréthane thermoplastique de 0,38 mm d'épaisseur.

L'ensemble est placé dans un sac après avoir disposé sur le film de PET une autre feuille de verre muni d'un agent de démoulage, utilisée en tant que contre-moule.

Le sac est soumis au vide afin de réaliser un préassemblage. Puis l'ensemble est placé dans un autoclave afin de réaliser l'assemblage définitif par l'action de la température (environ 130°C) et la pression (environ 10 bars) pendant 1 heure environ.

A la sortie de l'autoclave la feuille de verre faisant contre-moule est retirée et le vitrage est prêt à être monté dans une baie de carrosserie, en tant que pare-brise de sécurité.

### EXEMPLE COMPARATIF 1

On fabrique un vitrage de la même façon que dans l'exemple 1 mais par assemblage direct d'une feuille complexe formée d'une couche de PVB plastifié de 0,76 mm d'épaisseur et d'un film PET de 0,18 mm d'épaisseur revêtu d'une couche de polysiloxane, avec une feuille de verre recuit de 3 mm d'épaisseur, le collage avec le verre s'opérant par l'intermédiaire du PVB de la feuille complexe.

### EXEMPLE 2

On fabrique un vitrage par assemblage d'une feuille de verre trempé chimiquement de 3 mm d'épaisseur et d'une feuille complexe formée d'une couche de PVB plastifié de 0,76 mm d'épaisseur, d'un film de PET de 0,18 mm d'épaisseur revêtu d'une couche de protection en polysiloxane, en interposant entre la feuille de verre préalablement traitée par une composition de primaire à base de gamma-aminopopyltriéthoxysilane, et la feuille complexe une feuille de polyuréthane thermoplastique de 2 mm d'épaisseur. On opère comme dans l'exemple 1.

Pour mettre en évidence les avantages de l'invention, on mesure les valeurs d'adhésion par la méthode du test de pelage qui consiste à exercer sur une bande de 1 cm de large une traction perpendiculaire à la surface du vitrage avec une vitesse de traction de 5 cm par minute, et à différentes températures.

A 20°C les valeurs sont respectivement pour l'exemple 1, l'exemple comparatif 1 et l'exemple 2 de : 20 daN, 7 daN, 20 daN.

A 0°C les valeurs sont 21 daN, 7 daN, 19 daN.

D'autre part le vitrage selon l'invention présente des propriétés anti-éclats jusqu'à des températures de -20° C et même moins alors que le vitrage selon l'exemple comparatif 1 perd déjà ses propriétés anti-éclats à une température de 5° C environ.

En atmosphère humide, à 55° C et à 100 % d'humidité relative, les vitrages selon les exemples 1 et 2 présentent des valeurs d'adhésion au test de pelage de 8 daN/cm, alors que pour le vitrage selon l'exemple comparatif cette valeur est quasiment nulle et que l'on observe un décollement du film complexe.

## Revendications

1. Vitrage de sécurité comprenant un substrat en verre et une feuille complexe en matière plastique comprenant une couche de polyvinylbutyral plastifié et un film de polyester, pourvu d'un revêtement résistant à la rayure et à l'abrasion, **caractérisé en ce qu'**entre le substrat en verre et la couche de polyvinylbutyral de la feuille complexe de matière plastique est intercalée une couche adhésive de polyuréthane thermoplastique.

2. Vitrage selon le revendication 1, **caractérisé en ce que** le substrat en verre est une feuille de verre recuit ou trempé.

3. Vitrage selon la revendication 2, **caractérisé en ce que** le verre est trempé chimiquement.

4. Vitrage selon l'une des revendications 1 à 3, **caractérisé en ce que** la couche de polyuréthane thermoplastique possède une épaisseur comprise entre 0,05 et 3 mm.

5. Vitrage selon une des revendications 1 à 4, **caractérisé en ce que** le substrat est une structure feuilletée en verre.

6. Vitrage selon une des revendications 1 à 5, **caractérisé en ce que** le revêtement résistant à la rayure et à l'abrasion est un revêtement dur à base d'organopolysiloxane.

7. Vitrage selon une des revendications 1 à 6, **caractérisé en ce que** la face du substrat en verre au contact de la couche de polyuréthane est traitée à l'aide d'une composition de primaire à base d'un organosilane.

8. Utilisation de l'association d'une couche de polyuréthane thermoplastique avec une couche de polyvinylbutyral plastifié afin de conférer à un vitrage de sécurité asymétrique verre-matière plastique des propriétés de résistance à la pénétration et/ou des propriétés anti-éclats dans une plage de températures plus étendue et dans des conditions d'humidité plus extrêmes que celles permises par le seul usage du PVB, ladite couche de polyuréthane thermoplastique étant intercalée entre un substrat en verre et ladite couche de polyvinylbutyral.

## Patentansprüche

1. Sicherheitsverglasung, welche ein Glassubstrat und eine komplexe Kunststoffolie umfaßt, die eine Schicht aus weichgemachtem Polyvinylbutyral und einen Polyesterfilm enthält, der mit einer kratzfesten und abriebbeständigen Beschichtung versehen ist, **dadurch gekennzeichnet, daß** zwischen dem Glassubstrat und der Polyvinylbutyralschicht der komplexen Kunststoffolie eine Haftschicht aus thermoplastischem Polyurethan eingelegt ist.

2. Verglasung nach Anspruch 1, **dadurch gekennzeichnet, daß** das Glassubstrat eine im Kühlofen abgekühlte oder eine vorgespannte Glasscheibe ist.

3. Verglasung nach Anspruch 2, **dadurch gekennzeichnet, daß** das Glas chemisch vorgespannt ist.

4. Verglasung nach einem der Ansprüche 1 bis 3, **dadurch gekennzeichnet, daß** die Dicke der Schicht aus thermoplastischem Polyurethan 0,05 bis 3 mm beträgt.

5. Verglasung nach einem der Ansprüche 1 bis 4, **dadurch gekennzeichnet, daß** das Substrat ein Verbundglas ist.

6. Verglasung nach einem der Ansprüche 1 bis 5, **dadurch gekennzeichnet, daß** die kratzfeste und abriebbeständige Beschichtung eine harte Beschichtung auf Basis eines Polyorganosiloxans ist.

7. Verglasung nach einem der Ansprüche 1 bis 6, **dadurch gekennzeichnet, daß** die Seite des Glassubstrats, die sich mit der Polyurethanschicht in Kontakt befindet, mit einer Haftvermittlungszusammensetzung auf Basis eines Organosilans behandelt worden ist.

8. Verwendung der Verbindung einer Schicht aus thermoplastischem Polyurethan mit einer Schicht aus weichgemachtem Polyvinylbutyral, um einer asymmetrischen Glas-Kunststoff-Sicherheitsverglasung gegen Durchdringung widerstandsfähige und/oder splitterfeste Eigenschaften innerhalb eines Temperaturbereichs, der größer ist, und unter Feuchtigkeitsbedingungen, die extremer als diejenigen sind, welche bei Verwendung von PVB allein toleriert werden, zu verleihen, wobei die thermoplastische Polyurethanschicht zwischen einem Glassubstrat und der Polyvinylbutyralschicht eingelegt wird.

## Claims

1. Safety glazing comprising a glass substrate and a complex sheet of plastics material incorporating a plasticized polyvinyl butyral layer and a polyester film, having a coating which is resistant to scratching and abrasion, characterized in that between the glass substrate and the polyvinyl butyral layer of the complex sheet of plastics material is inserted an adhesive layer of thermoplastic polyurethane.

2. Glazing according to claim 1, characterized in that the glass substrate is an annealed or tempered glass sheet.

3. Glazing according to claim 2, characterized in that the glass is chemically tempered.

4. Glazing according to one of the claims 1 to 3, characterized in that the thermoplastic polyurethane layer has a thickness between 0.05 and 3 mm.

5. Glazing according to one of the claims 1 to 4, characterized in that the substrate is a laminated glass structure.

6. Glazing according to one of the claims 1 to 5, characterized in that the coating resistant to scratching and abrasion is a hard coating based on organopolysiloxane.

7. Glazing according to one of the claims 1 to 6, characterized in that the face of the glass substrate in contact with the polyurethane layer is treated with the aid of an organosilane-based primer composition.

8. Use of the combination of a thermoplastic polyurethane layer and a plasticized polyvinyl butyral layer in order to give an asymmetrical glass-plastics material safety glazing penetration resistance and/or shatter-proof properties in a wider temperature range and more extreme humidity conditions than those permitted by the use of PVB alone, said thermoplastic polyurethane layer being inserted between a glass substrate and said polyvinyl butyral layer.
